# EUROPEAN PATENT SPECIFICATION

(11) **EP 2 162 006 B1**
(45) Date of publication and mention of the grant of the patent: **14.02.2018**
(21) Application number: 08767154.1
(22) Date of filing: 21.05.2008
(51) Int. Cl.: A21B 1/10, A21B 1/14, A21B 1/48

(54) **GAS-FIRED TUNNEL OVEN**
GASBEFEUERTER TUNNELOFEN
FOUR TUNNEL À GAZ

(30) Priority: 25.05.2007 SE 0701268
(43) Date of publication of application: 17.03.2010
(73) Proprietor: Sveba-Dahlén AB, 513 82 Fristad (SE)
(72) Inventor: JOHANSSON, Jan-Olof, S-507 45 Borås (SE)
(74) Representative: Awapatent AB
(86) International application number: PCT/SE2008/050593
(87) International publication number: WO 2008/147309

(56) References cited:
- EP-A1- 0 893 059
- EP-A2- 0 830 814
- EP-A2- 1 529 441
- CH-A- 441 180
- DE-A1- 19 516 514
- ES-A6- 2 004 906
- GB-A- 1 162 356
- GB-A- 1 298 966
- GB-A- 1 373 207
- US-A- 2 189 167
- US-A- 2 235 476
- US-A- 3 631 819
- US-A- 4 884 552
- US-A- 4 884 552
- US-A- 4 951 648

## Description

### Technical Field

The present invention relates to tunnel ovens, and in particular to gas-heated tunnel ovens.

### Background Art

Tunnel ovens are used for baking/cooking of food stuffs such as bread and biscuits but also other types of food stuffs, such as pizzas, pies etc. A tunnel oven generally includes a baking chamber, having upper and/or lower heater ducts providing heat to the product being baked/cooked. An conveyor, such as an endless belt, carries the products being baked/cooked through the baking chamber, between the upper and lower heater ducts.

A tunnel oven of the above type is disclosed in US-A-4 884 552. That particular patent relates to a oven for baking food products, such as pizza. In the disclosed oven heated air from gas fired burners are led through upper and lower heat exchangers transferring the heat to upper an lower canister means, which eventually, via upper and lower hearth plates transfers the heat to the product being baked. The disclosed tunnel oven utilizes radiative heating to indirectly heat the products to be baked. The canister means have an increasing diameter so as to compensate for the reduced air temperature as the air is transported through the system. EP0830814 A2 discloses a gas-fired tunnel oven according to the preamble of claim 1. The present development has shown that there is a need for gas-fired or oil-fired tunnel ovens that enables better handling capabilities regarding even heating of the product being baked and stability and adjustability in temperature. Also, increased energy costs calls for energy efficient solutions.

### Summary of the Invention

The invention is a gas-fired tunnel oven according to claim 1, which, inter alia, comprises upper and lower heating sections with upper and lower heating means defining a baking chamber between them. Each section has an associated gas-fired burner arranged to provide heated gases to each heating means through ducts. At least one section comprises a fan arranged downstream at least one heating means, the fan being arranged to drive a flow of heated gases from the burner through at least one section and through a recirculation duct arranged to recirculate gases from the fan to a location upstream the heating means.

The inventive device offers the possibility of a precise and homogenous heating of the baking chamber by a precise adjustment of the upper and lower heating means. The fact that combustion gases are used, without separate intermediate heat-exchangers also improves energy efficiency. Further, this precise adjustment can be performed without a complex arrangement of valves and baffles since each burner is individually regulated. The fact that combustion gases are used directly, without intermediate heat-exchangers also reduces energy losses. The flow through the system is driven by the fan, i.e. by a subpressure. This provides an uncomplicated regulation of the flow through the system. It also provides for a reduced risk of leakage of hot gases, which could pose a hazard for an operator.

The gas-fired tunnel oven of one or more embodiments may further comprise a control unit and temperature sensors connected to the control unit, wherein the control unit is configured to individually regulate the power delivered by each burner, based on information from the temperature sensors. The use of several temperature sensors for detection of the oven temperature and individual regulation of burner power based on the detected temperature results in a precise regulation of the temperature in the baking chamber. The temperature in the baking chamber will be highly reproducible, which is a prerequisite for a first-class baking result.

A flue gas exit, arranged to lead flue gas out of the system, may be connected to each recirculation duct. The location of the flue gas exit secures an automatic function. If the burner is activated it will use air from outside the heating system. This will increase the pressure downstream the burner and consequently also downstream the fan. This will in turn force gas in the recirculation duct out through the flue gas exit. When the burner is not operating the pressure in the system is constant and no gas will be forced out through the flue gas exit.

The heating means may comprise several individual channels arranged to lead heated gases from a distributor manifold to a collector manifold. The use of individual channels provides a more homogenous and controllable temperature distribution.

An internal duct system is arranged in the distributor manifold so as to distribute heated gas through the channels. This also provides a more controllable temperature distribution. Further, the use of a duct system in the distributor manifold enables tailor-made solutions at a low cost, i.e. starting from a basic tunnel oven system where other parts of ducts, fans etc are essentially identical the flow distribution through the heating means can be readily adjusted.

Likewise, an internal duct system is arranged in the collector manifold and adjustable valves are arranged to, via actuators enable adjustment of a valve opening degree and thereby the mass flow over the valve. This enables essentially individual regulation of each channel. In particular, the outermost channels can be blocked. This is an advantageous feature in cases where only part of the baking-chamber width is used, e.g. when peripheral equipment such as a rising chamber for some reason has a smaller width or when an inventive oven is incorporated into an older system.

The burner may in one or more embodiments comprise a separating section, such that recirculated gas is ejected outside said separating section and combustion gases are ejected inside said separating section. The separating section provides for a effective heat transfer and mixing between fresh and recirculated gas. The separating section may be annularly formed.

Vanes may be arranged to induce a swirling motion of the recirculated gas, so as to improve mixing. The swirling motion, and the overall increased turbulence, induced by the vanes improves the gas mixing further.

In one or more embodiments the burners and fans are arranged on an upper side of the oven. This has the distinct and practical advantage that it facilitates the construction of an oven where the height of the heating chamber is more readily adjusted and where the clearance below the lower heater pipes and an underlying structure can be smaller than for the first embodiment. This makes the installation of a tunnel oven at a specific location simpler, since it offers greater flexibility, and thus also less time consuming, which lowers installation costs.

In one or more embodiments a first burner and fan are arranged on an upper side of the oven and a second burner and fan are arranged on the lower side of the oven, which is advantageous in that it facilitates the installation of a tunnel oven at a specific location simpler.

Each section may comprise a fan arranged downstream each heating means, which is arranged to drive a flow of heated gases through each section, and a recirculation duct arranged to recirculate gases from the fan to a location upstream the heating means.

A second aspect of the invention is an oven system according to any of claims 1-9, comprising a plurality of gas-fired tunnel ovens according to the description above, wherein each gas-fired tunnel oven corresponds to a zone. In other words, several ovens can be joined to form a series of ovens corresponding to a need of a particular installation.

### Brief Description of the Drawings

Fig. 1 a is a first perspective view of a tunnel oven according to a first embodiment of the inventive concept, with part of the supporting frame and cover plates removed for clarity.
Fig. 1b is a second perspective view of a tunnel oven according to a first embodiment of the inventive concept, with part of the supporting frame and cover plates removed for clarity.
Fig. 2a is an end view of the approximate centre of the burner of Fig. 1.
Fig. 2b is a section view along a horizontal plane through the approximate centre of the burner of Fig. 1, showing a detail of the fan, the flue gas exit, and the burner.
Fig. 2c is a perspective view of the burner of Fig. 1, showing the fan, the flue gas exit, and the burner.
Fig. 3 is a section along a horizontal plane through the approximate centre of the distributor manifold of Fig. 1 for the inventive device.
Fig. 4 is a section along a horizontal plane through the approximate centre of the collector manifold of Fig. 1 for the inventive device.
Fig. 5 is a perspective view of a tunnel oven according to a second embodiment of the inventive concept.
Fig. 6 is a schematic view of a tunnel oven, showing temperature regulators and thermo sensors.

### Detailed Description of Preferred Embodiments of the Invention

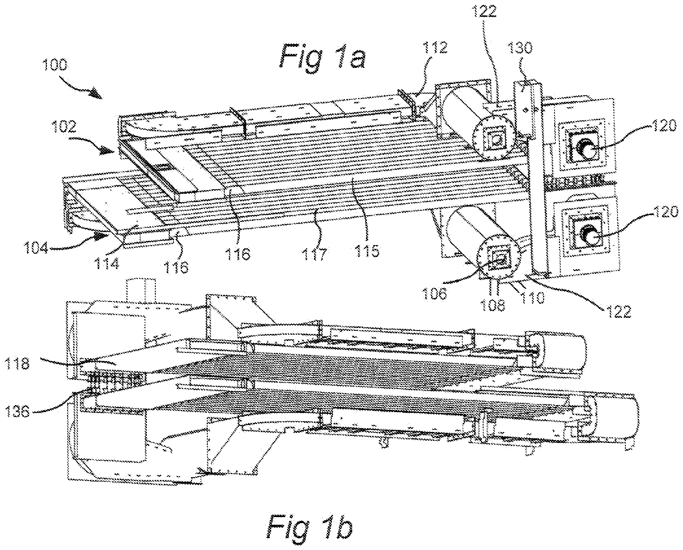

Fig. 1a and Fig. 1b shows perspective views of a first embodiment of a tunnel oven 100. Parts of the support frame and protective plates are removed to show elements related to the heating system. The tunnel oven has upper and lower heating sections 102 and 104, respectively, defining a heating chamber there between. A conveyor belt (not shown), generally an endless belt such as a wiremesh belt, a solid steel belt or a stone/steel plate belt etc, is arranged to convey products to be baked through the heating chamber, from an entrance side to an exit side of the oven 100.

The heating system will now be described, starting with the burner 106 and continuing downstream thereof. The upper and lower heating sections 102 and 104 are essentially identical, and in the drawings reference numerals have in some cases been located on only the lower section or the upper section, in order to increase clarity, even if the element in question is located on both sections. A gas line 108 supplies gas to the burner 106 from an external source and an air inlet 110 supplies combustion air from the outside. The burner may be either gas-fired or oil-fired. The combustion gases are transported along a duct 112, leading the gases from a first to a second end of the oven. The duct opens to a distributor manifold 114 having several heater pipes 116 extending from there. The heater pipes 116 extends essentially parallel to the heating chamber in a direction from the entrance side to the exit side.

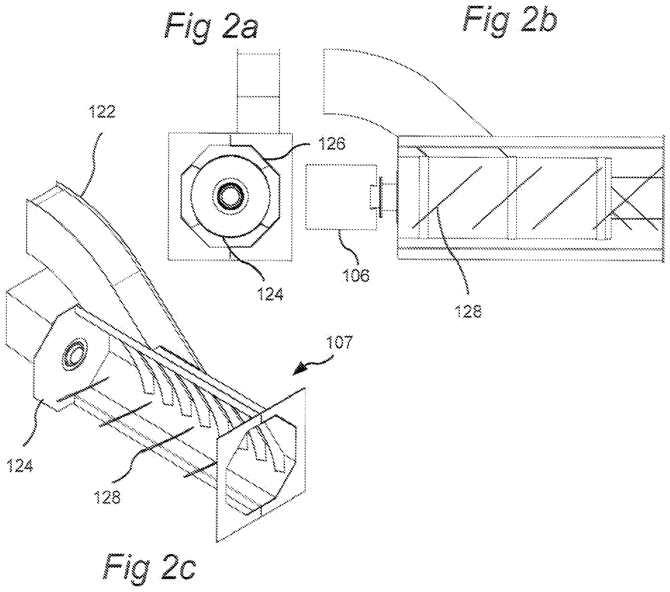

The heater pipes 116 enters a collector manifold 118. A fan 120 is arranged in one side of the collector manifold 118 to create a subpressure therein so as to drive a flow through the heating system. From the fan 120 a recirculation duct 122 leads the air back to the burner section. As can be seen in Figs. 2 a-c the combustion chamber 107 has a concentrically arranged annular section 124. It is to be noted that any suitable shape could be used for the separating section 124, not necessarily annular. The recirculation duct 122 leads air a location outside the annular section 124 while the flame, when the burner is activated, is located inside the annular section. This ensures an adequate heat transfer between the flame and the recirculated air. Vanes 128 are arranged outside of the annular section to cause a swirling motion of the air. This enhances heat transfer and mixing of gases downstream the annular section.

A flue gas exit 130 is fluidly connected to the recirculation duct 122, downstream the fan 120 and upstream the annular sections 124, 126. In use, when the fan drives a gas flow through the system basically no air exits through the flue gas exit 130. If the burner is activated the intake air will increase the pressure in the system, which results in that part of the air being expelled from the fan 120 will exit through the flue gas exit 130. The system is thus operated at near atmospheric pressure.

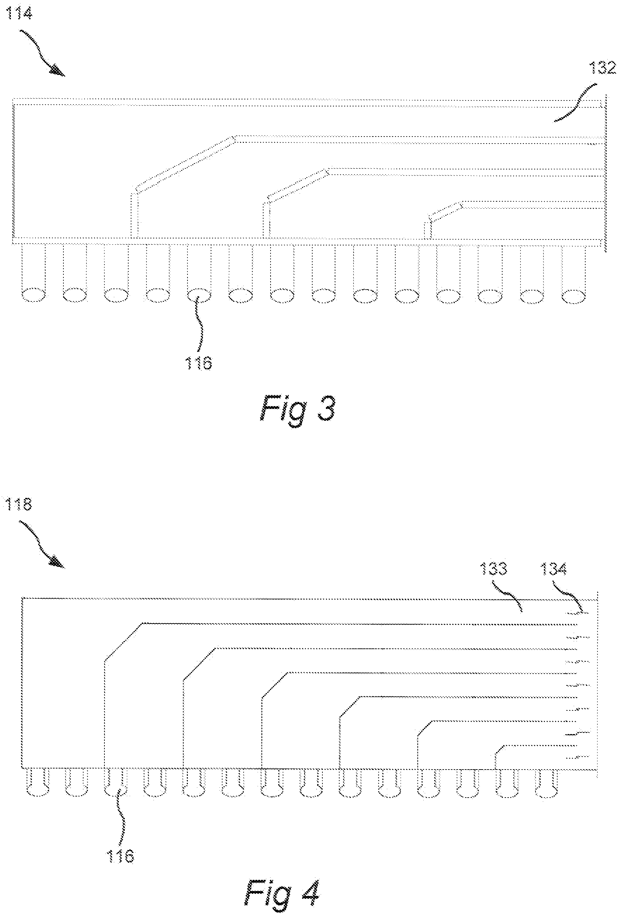

Figs 3 and 4 shows sectional views of the distributor manifold 114 and the collector manifold 118, respectively. They show in particular that an internal duct system 132, 133 is arranged to distribute the gases entering the heater pipes 116, and exiting the same. The collector manifold 118 further comprises adjustable flaps 134 so that the mass flow through the heater pipes can be varied. The flaps 134 operates as rotatable throttles, wherein a set angle of a flap 134 determines the opening degree. The flaps 134 are adjusted by means of flap actuators 136 accessible from the outside. The actuators 136 are generally adjusted by hand, but could equally well be adjusted by means of a motor device such as a stepping motor or similar, enabling an online and/or automatic control of the flow. Further, the mass flow through at least the outermost pipes 116 can be individually varied in order to adjust an active width of the oven in case of a situation where peripheral equipment so requires.

Heat sensors are arranged within the heating chamber. In the upper heating section the heating sensors are arranged directly below the upper heating element 115, well distant from any passing baked product. In the lower heating section the heating sensors are arranged between the lower heating element 117 and the conveyor belt (not shown). Heat sensors in the form of thermocouples are arranged to detect the heat delivered by each heating section. One or more thermocouples are connected to a control unit which control the burners, based on a actual value and a nominal value regarding temperature. Several various parameters such as fan speed, nominal temperature, flow distributions etc. can be used as input and regulating parameters for the control unit. The control unit comprises two temperature regulators, one for the lower burner and one for the upper burner, which are used to decide the effect of the burners. Advanced microprocessor control units such as PLC-systems may also be used.

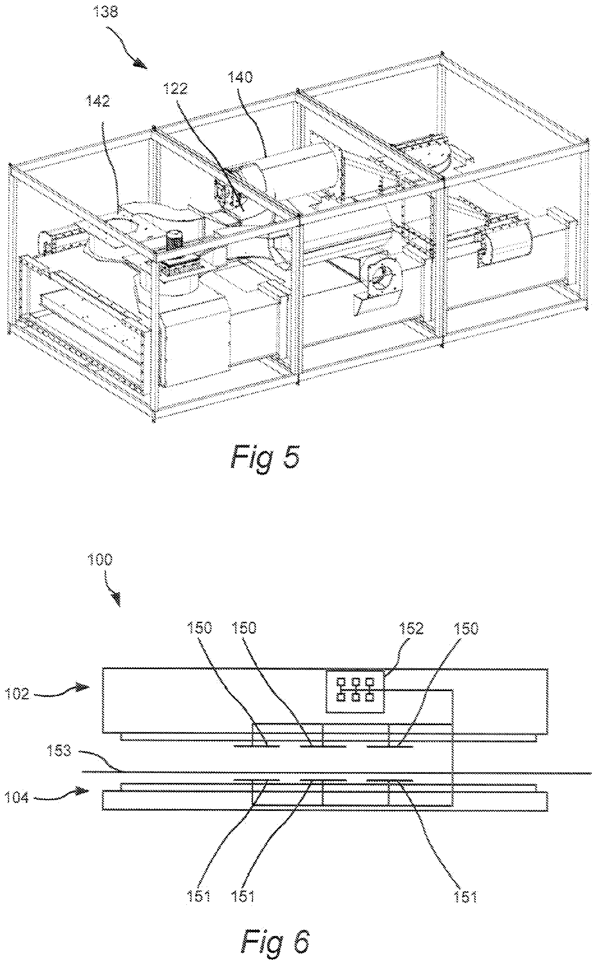

Fig. 5 shows a second embodiment of the inventive oven 138. In this embodiment both heating systems, with burners 140, fans 142 etc are arranged on top of the oven. This embodiment has the distinct advantage that it facilitates the construction of an oven where the height of the heating chamber is more readily adjusted and where there is need for a flexible height of the conveyor belt from the ground, and especially where the conveyor belt needs to be located close to the ground.

The oven according to present invention may be arranged in a plurality of gas-fired tunnel ovens, where each oven corresponds to one zone.

Fig. 6 shows a schematic view of the inventive tunnel oven 100, where a temperature regulator means 152 is arranged on the upper heating section 102 of the tunnel oven 100, but may also be arranged on the lower heating section 104, preferably below the conveyor belt 153. While thermo sensors 150, 151 here are mounted both on the upper heating section 102 and on the lower heating section 104, measuring the temperature between the upper- and lower heating section, but thermo sensors 150, 151 may also be arranged only on one heating section.

## Claims

1. Gas-fired tunnel oven comprising upper and lower heating sections (102, 104) with upper and lower heating means (116) defining a baking chamber between them, wherein each section (102, 104) has an associated gas-fired burner (106) arranged to provide heated gases to each heating means (116) through ducts (112), wherein at least one section (102, 104) comprises a fan (120) arranged downstream at least one heating means (116), said fan being arranged to drive a flow of heated gases from the burner (106) through at least one section (102, 104) and through a recirculation duct (122) arranged to recirculate gases from the fan to a location upstream the heating means (116), **characterised in that** the heating means (116) comprise several individual channels arranged to lead heated gases from a distributor manifold (114) to a collector manifold (118), and wherein an internal duct system (132) is arranged in the distributor manifold (114) so as to distribute heated gas through the channels, wherein an internal duct system (133) is arranged in the collector manifold (118) and wherein the collector manifold (118) further comprises adjustable flaps (134) so that the mass flow through the heater pipes can be varied.

2. The gas-fired tunnel oven of claim 1, further comprising a control unit and temperature sensors connected to the control unit, wherein the control unit is configured to individually regulate the power delivered by each burner (106) based on information from the temperature sensors.

3. The gas-fired tunnel oven of any of the preceding claim, wherein a flue-gas exit, arranged to lead flue gas out of the system, is connected to each recirculation duct (122).

4. The gas-fired oven of any preceding claim, wherein the burner (106) comprises a separating section (124), such that recirculated gas is ejected outside said separating section (124) and combustion gases are ejected inside said separating section.

5. The gas-fired oven according to claim 4, wherein the separating section (124) is annularly formed.

6. The gas-fired oven of claim 4 or 5, wherein vanes (128) are arranged to induce a swirling motion of the recirculated gas, so as to improve mixing.

7. The gas-fired tunnel oven of any preceding claim, wherein the burners (106) and fans (120) are arranged on an upper side of the oven.

8. The gas-fired tunnel oven of any preceding claim, wherein one first burner (106) and fan (120) are arranged on an upper side of the oven and one second burner (106) and fan (120) are arranged on a lower side of the oven.

9. The gas-fired tunnel oven of any preceding claim, wherein each section (102, 104) comprises a fan (120) arranged downstream each heating means (116), which is arranged to drive a flow of heated gases through each section (102, 104) and a recirculation duct (122) arranged to recirculate gases from the fan to a location upstream the heating means (116).

10. Oven system comprising a plurality of gas-fired tunnel ovens according to any preceding claim, wherein each gas-fired tunnel oven corresponds to a zone.

## Patentansprüche

1. Gasbefeuerter Durchlauftrockenofen, der obere und untere Heizabschnitte (102, 104) mit oberen und unteren Heizvorrichtungen (116) umfasst, die eine Backkammer dazwischen definieren, wobei jeder Abschnitt (102, 104) einen zugehörigen gasbefeuerten Brenner (106) hat, der dafür ausgelegt ist, erwärmte Gase jeder Heizvorrichtung (116) durch Kanäle (112) zuzuführen, wobei mindestens ein Abschnitt (102, 104) einen Lüfter (120) umfasst, der stromabwärts von mindestens einer Heizvorrichtung (116) angeordnet ist, wobei der Lüfter dafür ausgelegt ist, einen Strom von erwärmten Gasen vom Brenner (106) durch mindestens einen Abschnitt (102, 104) und durch einen Rückführungskanal (122) zu treiben, der zum Rückführen von Gasen vom Lüfter zu einem Ort stromaufwärts von den Heizvorrichtungen (116) ausgelegt ist,
**dadurch gekennzeichnet, dass**
die Heizvorrichtungen (116) mehrere einzelne Kanäle umfassen, die zum Führen der erwärmten Gase von einem Unterverteiler (114) zum einem Sammelverteiler (118) ausgelegt sind, und wobei ein internes Kanalsystem (132) im Unterverteiler (114) angeordnet ist, um so erwärmtes Gas durch die Kanäle zu verteilen, wobei ein internes Kanalsystem (133) im Sammelverteiler (118) angeordnet ist und wobei der Sammelverteiler (118) ferner einstellbare Klappen (134) umfasst, sodass der Massenstrom durch die Heizleitungen variiert werden kann.

2. Gasbefeuerter Durchlauftrockenofen nach Anspruch 1, der ferner eine Steuereinheit und Temperatursensoren umfasst, die mit der Steuereinheit verbunden sind, wobei die Steuereinheit dafür ausgelegt ist, die Leistung, die von jedem Brenner (106) geliefert wird, auf der Basis von Informationen von den Temperatursensoren zu regulieren.

3. Gasbefeuerter Durchlauftrockenofen nach einem der vorherigen Ansprüche, wobei der Abgasausgang, der zum Führen von Abgas aus dem System heraus ausgelegt ist, mit jedem Rückführungskanal (122) verbunden ist.

4. Gasbefeuerter Durchlauftrockenofen nach einem der vorherigen Ansprüche, wobei der Brenner (106) einen Trennabschnitt (124) derart umfasst, dass das rückgeführte Gas außerhalb des Trennabschnitts (124) ausgestoßen wird und Verbrennungsgase innerhalb des Trennabschnitts ausgestoßen werden.

5. Gasbefeuerter Durchlauftrockenofen nach Anspruch 4, wobei der Trennabschnitt (124) ringförmig ausgebildet ist.

6. Gasbefeuerter Durchlauftrockenofen nach Anspruch 4 oder 5, wobei Leitschaufeln (128) dafür ausgelegt sind, eine Wirbelbewegung des rückgeführten Gases zu induzieren, um so das Mischen zu verbessern.

7. Gasbefeuerter Durchlauftrockenofen nach einem der vorherigen Ansprüche, wobei die Brenner (106) und Lüfter (120) an der oberen Seite des Ofens angeordnet sind.

8. Gasbefeuerter Durchlauftrockenofen nach einem der vorherigen Ansprüche, wobei ein erster Brenner (106) und Lüfter (120) an einer Oberseite des Ofens angeordnet sind und ein zweiter Brenner (106) und Lüfter (120) an einer Unterseite des Ofens angeordnet sind.

9. Gasbefeuerter Durchlauftrockenofen nach einem der vorherigen Ansprüche, wobei jeder Abschnitt (102, 104) einen Lüfter (120) umfasst, der stromabwärts von jeder Heizvorrichtung (116) angeordnet ist, die dafür ausgelegt ist, einen Strom von erwärmten Gasen durch jeden Abschnitt (102, 104) und einen Rückführungskanal (122) zu treiben, der dafür ausgelegt ist, Gase vom Lüfter zu einem Ort stromaufwärts von der Heizvorrichtung (116) umzuwälzen.

10. Ofensystem, das mehrere gasbefeuerte Durchlauftrockenöfen nach einem der vorherigen Ansprüche umfasst, wobei jeder gasbefeuerte Durchlauftrockenofen einer Zone entspricht.

## Revendications

1. Four tunnel à gaz comprenant des sections de chauffage supérieure et inférieure (102, 104) avec des moyens de chauffage supérieur et inférieur (116) définissant une chambre de cuisson entre eux, dans lequel chaque section (102, 104) a un brûleur à gaz (106) associé étudié pour fournir des gaz chauffés à chaque moyen de chauffage (116) via des conduits (112), dans lequel au moins une section (102, 104) comprend un ventilateur (120) disposé en aval d'au moins un moyen de chauffage (116), ledit ventilateur étant étudié pour entraîner un écoulement de gaz chauffés du brûleur (106) à travers au moins une section (102, 104) et à travers un conduit de recirculation (122) étudié pour faire recirculer des gaz du ventilateur vers un emplacement en amont des moyens de chauffage (116),
**caractérisé en ce que**
les moyens de chauffage (116) comprennent plusieurs canaux individuels étudiés pour conduire des gaz chauffés d'une tubulure de distribution (114) vers une tubulure de collecte (118), et dans lequel un système de conduits interne (132) est disposé dans la tubulure de distribution (114) de manière à distribuer des gaz chauffés à travers les canaux, dans lequel un système de conduits interne (133) est disposé dans la tubulure de collecte (118) et dans lequel la tubulure de collecte (118) comprend en outre des clapets ajustables (134) de manière à pouvoir faire varier le débit massique à travers les tuyaux de chauffage.

2. Four tunnel à gaz selon la revendication 1, comprenant en outre une unité de commande et des capteurs de température raccordés à l'unité de commande, dans lequel l'unité de commande est configurée pour réguler individuellement la puissance délivrée par chaque brûleur (106) sur la base d'informations des capteurs de température.

3. Four tunnel à gaz selon l'une quelconque des revendications précédentes, dans lequel une sortie de gaz brûlé, étudiée pour guider du gaz brûlé hors du système, est raccordée à chaque conduit de recirculation (122).

4. Four tunnel à gaz selon l'une quelconque des revendications précédentes, dans lequel le brûleur (106) comprend une section de séparation (124) de sorte que du gaz remis en circulation est éjecté à l'extérieur de ladite section de séparation (124) et que des gaz de combustion sont éjectés à l'intérieur de ladite section de séparation.

5. Four tunnel à gaz selon la revendication 4, dans lequel la section de séparation (124) est formée de façon annulaire.

6. Four tunnel à gaz selon la revendication 4 ou 5, dans lequel des ailettes (128) sont disposées de manière à induire un mouvement de tourbillonnement du gaz remis en circulation de façon à améliorer le mélange.

7. Four tunnel à gaz selon l'une quelconque des revendications précédentes, dans lequel les brûleurs (106) et ventilateurs (120) sont disposés d'un côté supérieur du four.

8. Four tunnel à gaz selon l'une quelconque des revendications précédentes, dans lequel un premier brûleur (106) et ventilateur (120) sont disposés d'un côté supérieur du four et un deuxième brûleur (106) et ventilateur (120) sont disposés d'un côté inférieur du four.

9. Four tunnel à gaz selon l'une quelconque des revendications précédentes, dans lequel chaque section (102, 104) comprend un ventilateur (120) disposé en aval de chaque moyen de chauffage (116), lequel est étudié pour entraîner un écoulement de gaz chauffés à travers chaque section (102, 104), et un conduit de recirculation (122) étudié pour faire recirculer des gaz du ventilateur vers un emplacement en amont des moyens de chauffage (116).

10. Système de fours comprenant une pluralité de fours tunnel à gaz selon l'une quelconque des revendications précédentes, dans lequel chaque four tunnel à gaz correspond à une zone.
